# EUROPEAN PATENT SPECIFICATION

(11) **EP 1 150 437 B1**
(45) Date of publication and mention of the grant of the patent: **08.06.2005**
(21) Application number: 01201534.3
(22) Date of filing: 26.04.2001
(51) Int. Cl.: H04B 1/38, H04M 1/60

(54) **Communication system, selection means for a communication system and use thereof**
Kommunikationssystem , Auswahlmittel für ein Kommunikationssystem und Verwendung desselben
Système de communication , moyens de sélection pour un système de communication et utilisation de celui-ci

(30) Priority: 26.04.2000 DK 200000681; 01.05.2000 DK 200000711
(43) Date of publication of application: 31.10.2001
(73) Proprietor: QuBit ApS, 2400 Copenhagen NV (DK)
(72) Inventor: Ole Magleby, Gudmand-Hoyer, 2820 Gentofte (DK)
(74) Representative: Elmeros, Claus

(56) References cited:
- WO-A-00/10311
- WO-A-96/32783
- GB-A- 2 329 773
- GB-A- 2 338 621
- US-A- 5 802 167

## Description

### Background of the invention

The present invention relates to a communication system, selection means for a communication system, method of communication and use thereof.

In recent years, the use of mobile telephones has increased significantly. The number of situations in which mobile telephones are used has also increased and one of the most popular situations is during transport. The use of mobile telephones by the driver of e.g. a vehicle has, however, led to a lot of traffic accidents.

To avoid some of the traffic accidents, the mobile telephone may be placed in a cradle allowing the driver to use the telephone while having his hands free. To ensure an acceptable quality of the communication in relation to surrounding noise, the driver may use a headset. The loudspeaker and microphone of the headset are placed in close proximity to the driver's ear and mouth, respectively.

UK patent applications Nos. GB-A 2329773 and GB-A 2338621 disclose communication systems for vehicles wherein a change between the use of radio and a mobile telephone may be performed e.g. in the situation of a call to the mobile telephone.

A problem with the known systems is the fact that the driver has to perform a number of actions in order to initiate communication. A second action will be to lower the sound level of the auto radio and a further action to accept the call by pressing the correct button on the mobile telephone. Each of these actions requires the driver to shift his focus from the road to the apparatus in question.

A further problem is the fact that the headset will usually irritate the driver after a while and he will be tempted to take it off. If a call is received by the mobile telephone, the driver has to shift his attention to locating the headset and quickly in order not to lose the call.

The object of the invention is to create a communication system which is safe and easy to use.

A further object is to establish a communication system with improved sound quality.

### The invention

The characterizing part of claim I describes that said system further comprises selection means for establishing contact between said communication device and said first sound device or said second sound device, and partial or complete interruption of contact between said audio source and the sound device connected to the audio source where said selection means is controlled by a remote control allowing the user to choose between said first and second sound devices.

The communication system, such as a communication system for a vehicle, comprises at least one communication device such as a mobile phone, at least one audio source such as an auto radio, a first sound device, a second sound device and selection means for establishing contact between said communication device and said second or first sound device, and partial or complete interruption of contact between said audio source and the sound device connected to the audio source.

The communication system allows the driver of a vehicle to choose which sound device to use in an easy and non-distracting manner.

It should be emphasized that even though the system should preferably be used in connection with vehicles, the system may be used in any noisy environment in relation to which the complete attention of a user is vital. Examples of vehicles may be cars, trucks, tractors or similar work machines.

It should also be emphasized that other places of use are possible besides vehicles. An example may be on the bridge of ships where the communication device is usually a maritime radio e.g. a satellite or a VHF radio with a number of sound systems. In a variation of the above-mentioned example, the maritime radio may be the device to be muted because another more important message needs to be heard through a sound system.

A further example of use may be in the cockpit of an airplane.

The term "the sound device (4, 5) connected to the audio source" is preferably to be understood as the first sound device. However, if the audio source is connected to another loudspeaker e.g. a second sound device or a third sound device, this connection is interrupted. The audio source may also be connected to the first sound device together with other sound devices such as the front and back loudspeaker set of a car.

When said second sound device includes a headset, a preferred embodiment of the invention has been achieved. With the use of a headset, the driver and the person communicating with the driver through a mobile telephone will have a clear signal without interference from the vehicle. Hereby, traffic safety is improved significantly since the driver has to dedicate less effort and concentration to understanding the conversation in relation to interference.

When said first sound device includes at least one microphone and least one loudspeaker, preferably in separate casings, it is possible to position the loudspeakers and especially the microphone anywhere suitable and advantageous. A suitable place for the microphone may be any position in which the conversation of the driver is picked up without any significant interference from the vehicle and in which the microphone is not distracting the driver. Further, the location should ensure that the microphone does not pose a potential risk to the health of the driver in case of a traffic accident.

When said selection means is connected to said audio source and said first sound device by means of a cable comprising connectors adapted to said audio source and said first sound device, a preferred embodiment of the invention has been achieved. The mounting of the selection means may be established without having to interfere with any existing cabling. This improves the user-friendliness of the communication system and decreases the risk of connecting the system in a wrongful manner.

Said selection means is controlled by a remote control allowing the user to choose between said first and second sound devices, a preferred embodiment of the invention has been achieved. Especially, the possibility of controlling the communication system by means of a single button on a remote control is advantageous. The driver of a vehicle who receives a call on his mobile telephone will only have to accept the call on the mobile telephone in order to initiate communication with the caller. The communication will be established through the loudspeaker and microphone of the first sound device after the system has muted the audio source. The driver may continue the conversation on the loudspeaker and microphone or safely locate his headset and then transfer all communication to the headset by means of the remote control. If the driver is wearing his headset upon receipt of the call, he only needs to push the button on the remote control after having accepted the call in order to receive the call in the headset. The driver can also push the button on the remote control, accept the call and then receive the call in the headset.

When said first sound device includes one or more loudspeakers of an auto radio system, the installation of the system is simple and easy since preinstalled loudspeakers may be used.

It should be emphasized that the first sound device can also be one or more separate loudspeakers having no connection to the audio source.

The characterizing part of claim 6 describes that said selection means further comprises microphone switching means for selection between a microphone in said first sound device and a microphone in said second sound device, at least one control device controlling said muting device and control of the routing of a signal from a communication device to a first or a second sound device by means of said microphone and loudspeaker switching means and vice versa where said selection

means is controlled by a remote control allowing the user to choose between said first and second sound devices.

When said selection means further comprises noise-damping means and a signal transformation means frequency filtering the signal transmitted to the loudspeaker of the second sound device, it is possible ensure that frequency signals outside a certain band are kept away from the headset. In particular, the frequency signals are signals from the communication device.

With signal filtering, the sound quality is improved in relation to noise. The user of the headset will experience this as a significant improvement when trying to understand the conversation coming out of the loudspeaker of the headset. As a result, the user does not have to concentrate quite as much on understanding the conversation and may focus primarily on driving his car. Afterwards, the user will be less exhausted from conversation due to the fact that less effort has been dedicated to understanding the conversation.

When said noise-damping means and signal transformation means remove or damp one or more frequency bands, it is possible to establish an efficient decoupling of any frequency signal by means of only a few electric components. Further, the size and price of the decoupling means can be kept low.

When said noise-damping means and signal transformation means remove or damp frequencies outside a band of 100 Hz to 10 kHz, preferably 200 Hz and 4 kHz, it is possible prevent the second sound system from reproducing frequencies outside the working area of a mobile telephone. The frequencies outside this band comprise different kinds of noise which makes conversation on the mobile telephone hard to understand.

The features of claim 10 provide a corresponding method for controlling communication of a communication device.

### Figures

The invention will be described in the following with reference to the figures, in which
- fig. 1: shows the basic embodiment of the invention,
- fig. 2a: shows a second part of a flow chart,
- fig. 2b: shows the flow chart continued from fig. 2a,
- fig. 3a: shows a preferred embodiment of the invention,
- fig. 3b: shows a section of fig. 3a,
- fig. 4: shows the connection of the second sound device according to an embodiment of the invention, and
- fig. 5: shows a cable used to connect different elements of the communication system.

### Detailed description

In a preferred embodiment, the invention relates to a communication system for use in a vehicle such as a car.

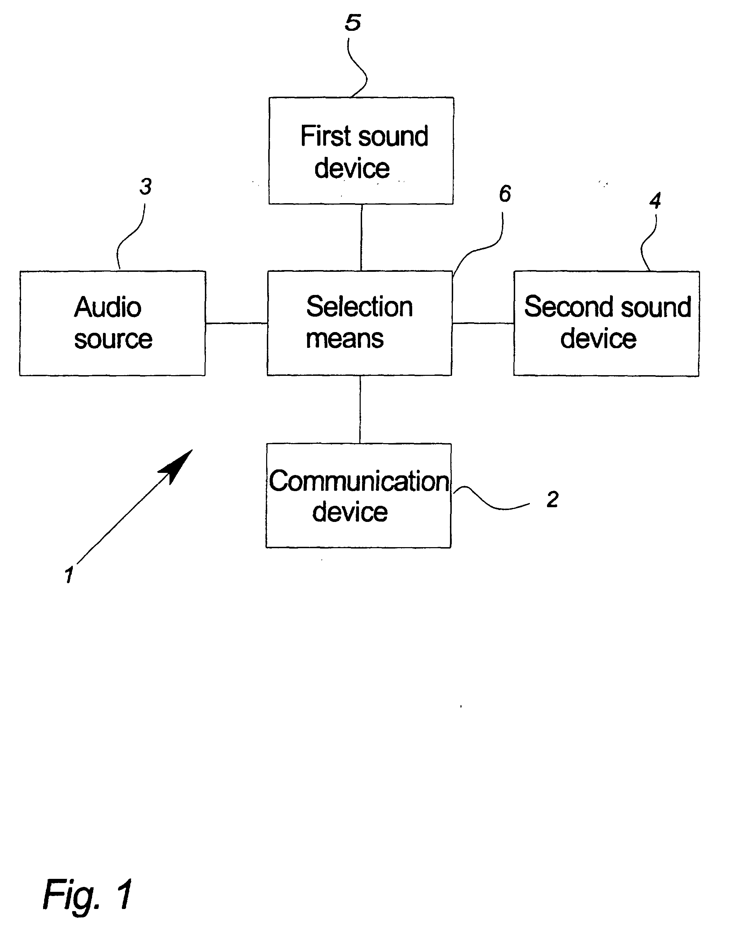

Fig. 1 shows a communication system 1 in which selection means 6 controls the connection between a communication device 1 and a second 4 or first sound device 5. The selection means 6 further controls the connection between an audio device 3 and the second or first sound device. The communication device is usually a mobile telephone placed in a cradle, such as a handsfree kit, and the audio device is an auto radio. The second sound device is a headset comprising a loudspeaker and a microphone and the first sound device is a separate loudspeaker and microphone. In a preferred embodiment, the first sound device may be the loudspeaker or loudspeakers of the auto radio system.

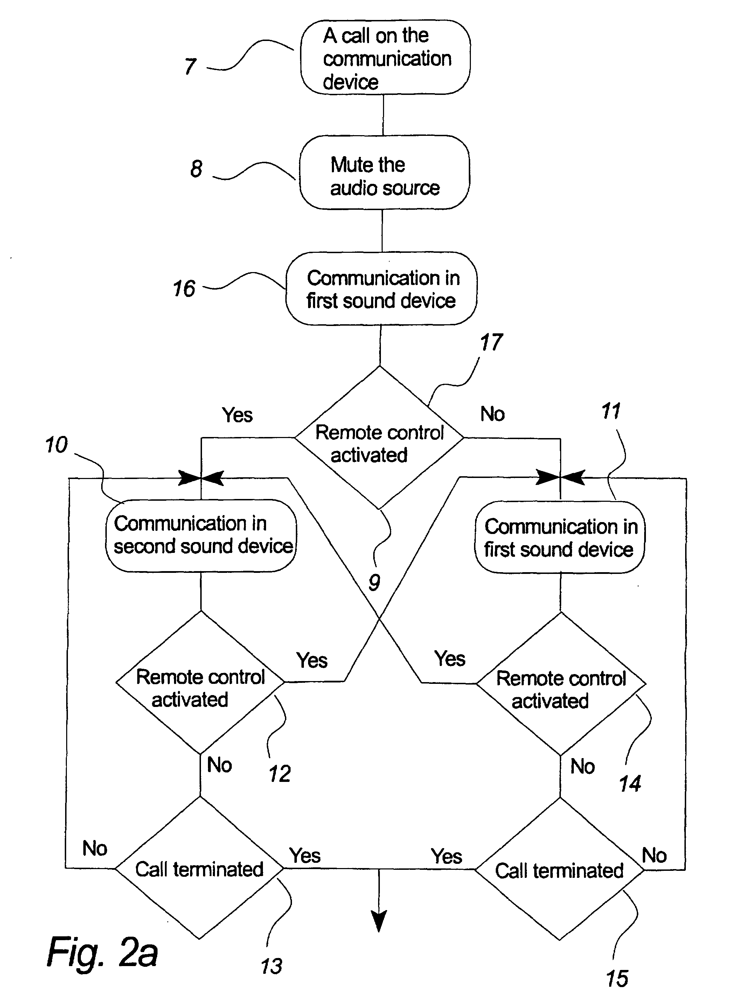

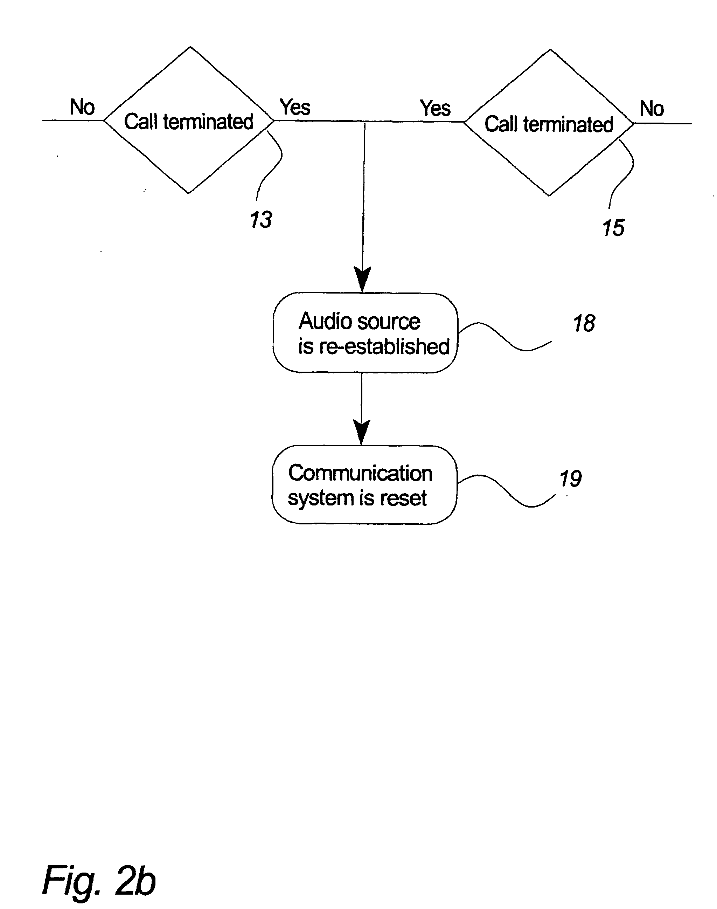

Figs. 2a and 2b show the functionality of a preferred embodiment of the invention by means of flow charts. The preferred embodiment involves use of the communication system in a car. However, other places of use are possible as already mentioned above.

The flow charts involve the steps of:
A call is received and accepted by a user 7,
The system mutes an audio source when a call is received on a communication device 8,
The system automatically selects the first sound device 16,
The user selects the second or first sound system by means of the remote control 17,
The user may change the sound device used by operating the remote control 12, 14.
The call is terminated 13, 15,
The setting of the audio device is re-established, e.g. sound level, after the call has been terminated 18
The communication system, including the selection means, is reset 19.

In detail, the communication system involves the following functionality:

With the audio source, e.g. an auto radio, on and music coming out of the loudspeakers, a call is made to the communication device 2 such as a mobile telephone which transmits a control signal in order to activate the selection means 6. A control device 26 in the selection means 6 turns on a control lamp in the remote control 21 and transmits a signal to the muting device 25. This device turns down the music and transmits a message to the loudspeaker switching means 23 to direct the conversation through the loudspeakers of the first sound device 5 and the microphone of the first sound system 5. It is now possible to engage in communication without the use of hands after having accepted the call on the mobile telephone. If the switching button of the remote control 21 is pushed, all sound will be transferred to the second sound device 4 e.g. in the form of a headset. The transfer is established by means of the control device 26 transmitting a signal to the loudspeaker switching means 23 and the microphone switching means 24 which will react in such a manner that the loudspeaker and microphone of the second sound device 4 are activated. At the same time, the control device 26 will turn off the sound in the loudspeaker of the first sound device e.g. in the form of an auto radio system via the loudspeaker switching means 23 and deactivate the microphone of the first sound device 5 by means of the microphone switching means 24. If the button on the remote control 21 is pushed simultaneously with acceptance of an incoming call, the call will be transmitted directly into the headset.

Once communication has been terminated, the control device 26 transmits a signal to the loudspeaker switching means 23 which activates the loudspeakers of the auto radio system and to the muting device 25 which directs the music back into the loudspeakers of the auto radio system, shuts off the control lamp in the switching means, and resets the control device 26 so that the next phone conversation may take place over the loudspeakers of the first sound device e.g. auto radio system and the microphone of the first sound device 5.

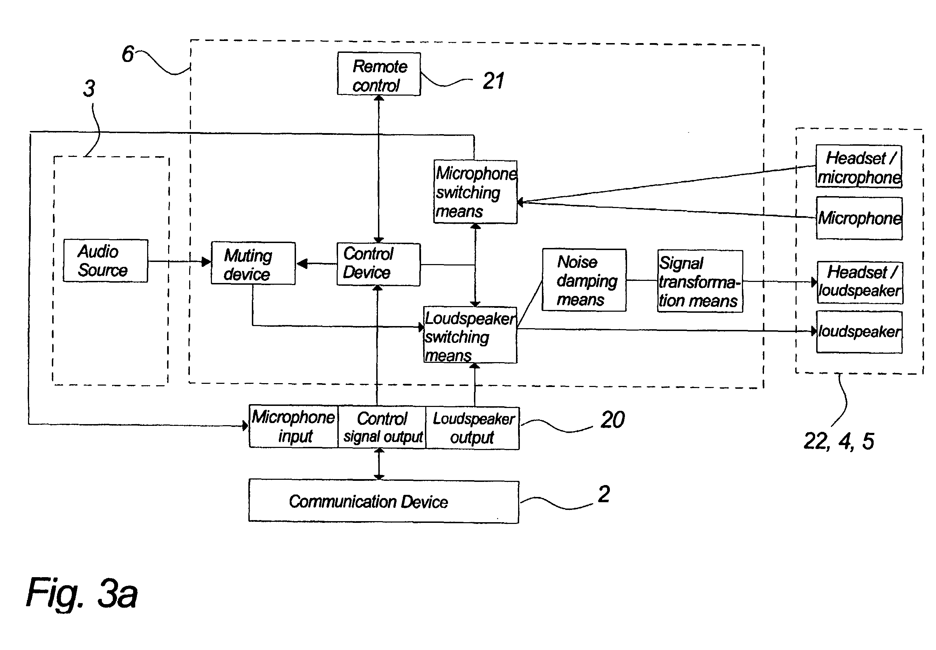

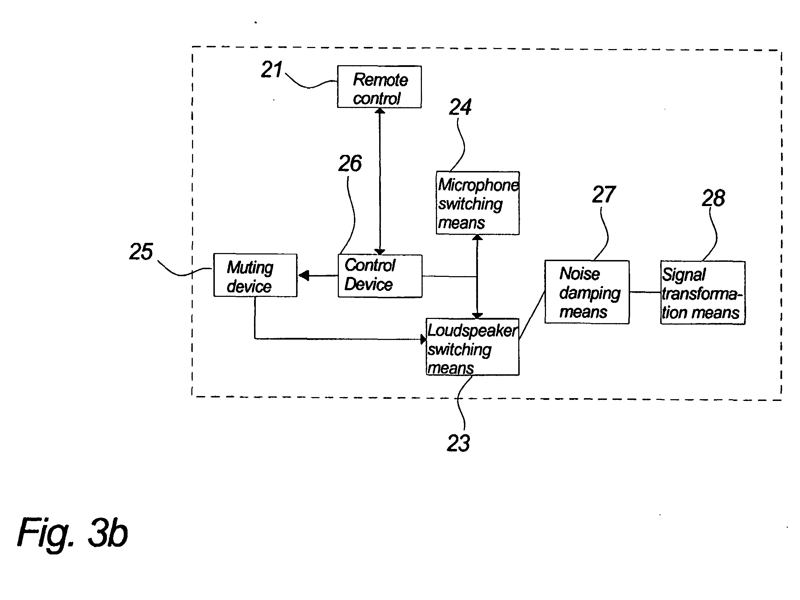

Figs. 3a and 3b show a preferred embodiment of a communication system 1 including selection means 6, said selection means comprising the following modules:

Control device 26, remote control 21, microphone switching means 23, loudspeaker switching means 24, muting device 25 noise-damping means 27 and signal transformation means 28.

The control system 1 also comprises a number of sound systems 22 including at least a second sound device 4 and first sound device 5. In the preferred embodiment, the second sound device is a headset with a loudspeaker and a microphone and the first sound device is the front loudspeakers of an auto radio system and a microphone. Further, the control system comprises an audio source 3 such as an auto radio. The loudspeaker or loudspeakers of the first sound device may also be in casings of their own in the same manner as the microphone of the first sound device. If the loudspeaker and microphone are in separate casings or in a common casing, the user may place the casing(s) in any place advantageous in order to e.g. obtain the best possible understanding of the conversation in his position.

The control device 26 comprises a flip-flop with set/reset and driver transistors for the switching means 23, 24. The control device 26 is activated by a control signal from the communication device 2.

The remote control 21 activates the control device 26 in such a manner that any communication may take place by means of the microphone/loudspeaker(s) of the headset in the second sound device 4 or the microphone/loudspeaker(s) of the first sound device 5. At the same time, the switching is controlled in such a manner that when the microphone and loudspeaker(s) of the headset are activated, the microphone/loudspeaker(s) of the first sound device 5 will be deactivated. By operating the remote control 21, the previously mentioned situation is reversed, i.e. the microphone/loudspeaker(s) of the headset are deactivated while the microphone/loudspeaker(s) of the first sound device 5 are activated.

The microphone switching means 24 switches between the microphone of the second sound device 4 and the microphone of the first sound device 5.

The loudspeaker switching means switches 23 between the loudspeakers of the second sound device 4 and the loudspeakers of the first sound device 5.

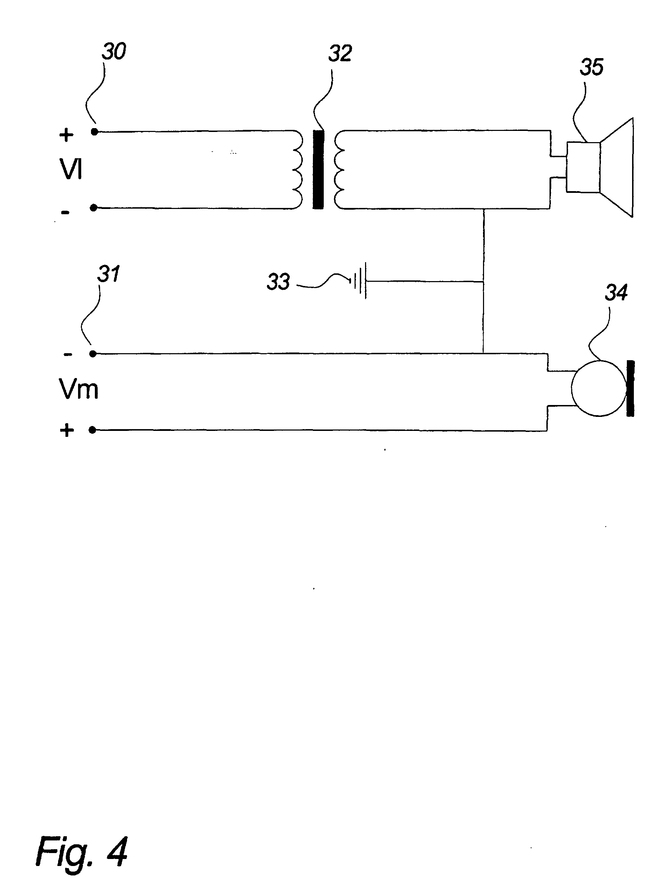

Fig. 4 shows the cabling of the loudspeaker and microphone of the second sound device 4. Some brands of communication devices 2 do not have the same earth connection as the microphone of the headset. The signal transformation means 28 converts the output signal of such communication devices 2 into a signal with an earth connection identical with that of the microphone. In this manner, a connection with three conductors has been obtained.

The signal transformation means 28 is shown in fig. 4 as a transformer 32 where the transformer preferably have a 1:1 ratio.

In addition, the transformer has the functionality of a bandpass filter allowing only frequencies within a certain band to pass. In a preferred embodiment, the band is between 100 Hz to 10 kHz, preferably 200 Hz to 4 kHz, since today's mobile telephones only transmit communication within these limits.

The characteristics of the transformer are such that the lower frequencies are cut off in accordance with normal transformer effect. Higher frequencies are so fast that the transformer is unable to transform the frequencies.

To ensure that noise signals from the surroundings, e.g. the generator of a vehicle, are not directed through the earth potential of the communication device to the earth potential of the selection means, the selection means has noise-damping means 27. The noise-damping means 27 damps any noise signals on the earth potential of the communication device.

The muting device 25 interrupts the connection of the loudspeakers to the loudspeaker output of the auto radio system and makes contact with an impedance instead of the impedance of the loudspeakers so that the disconnected loudspeaker output does not produce static.

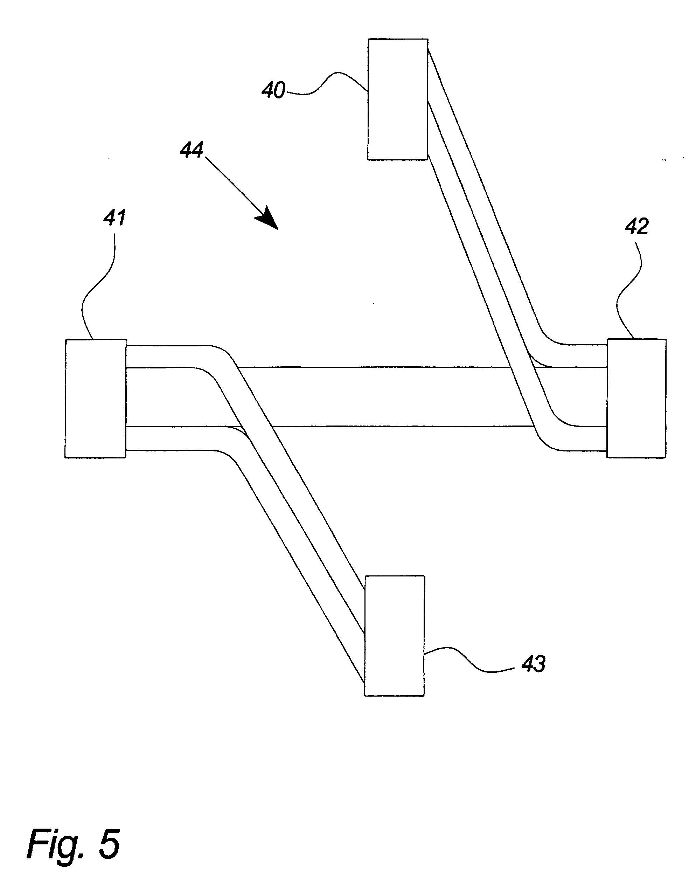

Fig. 5 shows a cable used to connect the different elements of the communication system and this cable 44 includes a number of connectors 40-43.

The first two connectors of the cable are an audio source cable connector 41 and a cable connector for the loudspeaker of the first sound device 42. The last two connectors 40, 43 are selection means 6 connectors.

The cable allows easy supplementary mounting in a vehicle of the selection means 6 according to the invention. The cable conducts the necessary signals from the audio source and the first sound device to the selection means and vice versa.

A multiple connector system makes it easy to adapt the selection means 6 to the various connectors used by car manufacturers in relation to both electricity and the loudspeakers.

In the preferred embodiment, the selection means receives its power supply from the same place as the cradle 20 of the mobile telephone e.g. a car battery. The power may, however, also be taken from the cable 44.

### List

- 1.: Communication system
- 2.: Communication device
- 3.: Audio source
- 4.: Second sound device
- 5.: First sound device
- 6.: Selection means
- 7-19.: Elements of a flow chart
- 20.: Cradle
- 21.: Remote control
- 22.: Sound devices
- 23.: Loudspeaker switching means
- 24.: Microphone switching means
- 25.: Muting device
- 26.: Control device
- 27.: Noise-damping means
- 28.: Signal transformation means
- 30.: Input for loudspeaker of second sound device
- 31.: Input for microphone of second sound device
- 32.: Signal transformation means
- 33.: Earth potential
- 34.: Microphone of second sound device
- 35.: Loudspeaker of second sound device
- 40.: Selection means connector
- 41.: Audio source cable connector
- 42.: Cable connector for the loudspeaker of first sound device
- 43.: Selection means connector
- 44.: Cable

## Claims

1. Communication system (1), such as a communication system for a vehicle, comprising
at least one communication device (2) such as a mobile phone,
at least one audio source (3) such as an auto radio,
a first sound device (5) comprising at least one microphone and one or more loudspeakers, and
a second sound device (4) comprising a microphone and one or more loudspeakers
**characterised in that**
said system further comprises selection means (6) for establishing contact between said communication device (2) and said first sound device (5) or said second sound device (4), and partial or complete interruption of contact between said audio source (3) and the sound device (4, 5) connected to the audio source where said selection means is controlled by a remote control (21) allowing the user to choose between said first and second sound devices (4, 5).

2. Communication system according to claim 1 **characterised in that** said second sound device (4) includes a headset.

3. Communication system according to claim 1 or 2 **characterised in that** at least one microphone and at least one loudspeaker of said first sound device (5) are located in separate casings.

4. Communication system according to any of claims 1 to 3 **characterised in that** said selection means (6) is connected to said audio source (3) and said first sound device (5) by means of a cable (44) comprising connectors (40 to 43) adapted to said audio source (3) and first sound device (5).

5. Communication system according to any of claims 1 to 4 **characterised in that** said first sound device (5) includes one or more loudspeakers of an auto radio system.

6. Selection means (6) for a communication system comprising
loudspeaker switching means (23) for selection between a loudspeaker in a first sound device and a loudspeaker in a second sound device,
a muting device (25) for partially or completely interrupting the connection of the output of at least one audio source (3) such as an auto radio to the loudspeaker switching means (23),
**characterised in that**
said selection means (6) further comprises microphone switching means (24) for selection between a microphone in said first sound device and a microphone in said second sound device,
at least one control device (26) controlling the muting device (25) and
controlling of the routing of a signal from a communication device (2) such as a mobile telephone to said first or a second sound device (4, 5) by means of said microphone and loudspeaker switching means (23, 24) and vice versa
where said selection means is controlled by a remote control (21) allowing the user to choose between said first and second sound devices (4, 5).

7. Selection means according to claim 6 **characterised in that** said selection means (6) further comprises noise-damping means (27) and/or signal transformation means (28) frequency filtering and/or damping of the signal transmitted to the loudspeaker of the second sound device (4).

8. Selection means according to claim 7 **characterised in that** said noise-damping means (27) and signal transformation means (28) remove or damp one or more frequency bands.

9. Selection means according to any of claims 7 to 8 **characterised in that** said noise-damping means (27) and signal transformation means (28) remove or damp frequencies outside a band of 100 Hz to 10 kHz, preferably 200 Hz and 4 kHz.

10. Method of controlling communication of a communication device (2) such as a mobile telephone by selecting between a first sound device (5) comprising at least one microphone and one or more loudspeakers and a second sound device (4) comprising a microphone and one or more loudspeakers, said method comprising the steps of
muting the output of at least one audio source (3) such as an auto radio connected to the loudspeakers when receiving a call on said communication device.
selecting the first sound device for the communication, and
changing between the first and second sound devices on the basis of a signal from a remote control (21).

11. Use of selection means according to any of claims 6 to 9 as a unit for supplementary mounting in a vehicle.

## Patentansprüche

1. Kommunikationssystem (1) wie z.B. ein Kommunikationssystem für ein Fahrzeug, umfassend
mindestens eine Kommunikationseinrichtung (2) wie z.B. ein Mobiltelefon,
mindestens eine Audioquelle (3) wie z.B. ein Autoradio,
eine erste Toneinrichtung (5), umfassend zumindest ein Mikrophon und einen oder mehrere Lautsprecher, und
eine zweite Toneinrichtung (4), umfassend ein Mikrophon und einen oder mehrere Lautsprecher,
**dadurch gekennzeichnet, dass**
das System des Weiteren Auswahlmittel (6) zum Herstellen eines Kontaktes zwischen der Kommunikationseinrichtung (2) und der ersten Toneinrichtung (5) oder der zweiten Toneinrichtung (4) und zur teilweisen oder vollständigen Unterbrechung des Kontaktes zwischen der Audioquelle (3) und der Toneinrichtung (4, 5), die mit der Audioquelle verbunden ist umfasst, wobei das Auswahlmittel durch eine Fembedienung (2 1 ) gesteuert wird, die es dem Benutzer erlaubt, zwischen der ersten und der zweiten Toneinrichtung (4, 5) zu wählen.

2. Kommunikationssystem nach Anspruch 1, **dadurch gekennzeichnet, dass** die zweite Toneinrichtung (4) einen Kopfhörer umfasst.

3. Kommunikationssystem nach Anspruch 1 oder 2, **dadurch gekennzeichnet, dass** zumindest ein Mikrophon und mindestens ein Lautsprecher der ersten Toneinrichtung (5) in separaten Gehäusen angeordnet sind.

4. Kommunikationssystem nach einem der Ansprüche 1 bis 3, **dadurch gekennzeichnet, dass** das Auswahlmittel (6) mit der Audioquelle (3) und der ersten Toneinrichtung (5) mittels eines Kabels (44) verbunden ist, das Verbindungsstücke (40 bis 43) umfasst, die an die Audioquelle (3) und die erste Toneinrichtung (5) angepasst sind.

5. Kommunikationssystem nach einem der Ansprüche 1 bis 4, **dadurch gekennzeichnet, dass** die erste Toneinrichtung (5) einen oder mehrere Lautsprecher eines Autoradiosystems umfasst.

6. Auswahlmittel (6) für ein Kommunikationssystem umfassend
Lautsprecherschaltmittel (23) zur Auswahl zwischen einem Lautsprecher in einer ersten Toneinrichtung und einem Lautsprecher in einer zweiten Toneinrichtung,
eine Stummschaltungseinrichtung (25), um die Verbindung der Ausgabe der zumindest einen Audioquelle (3) wie z.B. einem Autoradio mit den Lautsprecherschaltmitteln (23) teilweise oder vollständig zu unterbrechen,
**dadurch gekennzeichnet, dass**
das Auswahlmittel (6) des Weiteren Mikrophonschaltmittel (24) zur Auswahl zwischen einem Mikrophon in der ersten Toneinrichtung und einem Mikrophon in der zweiten Toneinrichtung,
mindestens eine Steuereinrichtung (26), die die Stummschaltungseinrichtung (25) steuert, und
das Steuern der Führung eines Signals von einer Kommunikationseinrichtung (2) wie z.B. einem Mobiltelefon an die erste oder zweite Toneinrichtung (4, 5) mittels der Mikrophon- und Lautsprecherschaltmittel (23, 24) und umgekehrt umfasst,
wobei das Auswahlmittel von einer Fernbedienung (21) gesteuert wird, die es dem Benutzung ermöglicht, zwischen der ersten und der zweiten Toneinrichtung (4, 5) zu wählen.

7. Auswahlmittel nach Anspruch 6, **dadurch gekennzeichnet, dass** das Auswahlmittel (6) des Weiteren Störgeräusch-Dämpfungsmittel (27) und/oder Signalumwandlungsmittel (28), die das zum Lautsprecher der zweiten Toneinrichtung (4) übertragene Signal frequenzfiltern und/oder dämpfen, umfasst.

8. Auswahlmittel nach Anspruch 7, **dadurch gekennzeichnet, dass** das Störgeräusch-Dämpfungsmittel (27) und das Signalumwandlungsmittel (28) ein oder mehrere Frequenzba(ä)nd(er) entfernen oder dämpfen.

9. Auswahlmittel nach Anspruch 7 oder 8, **dadurch gekennzeichnet, dass** das Störgeräusch-Dämpfungsmittel (27) und das Signalumwandlungsmittel (28) Frequenzen außerhalb eines Frequenzbereiches von 100 Hz bis 10 kHz, vorzugsweise 200 Hz und 4 kHz, entfernen oder dämpfen.

10. Verfahren zum Steuern der Kommunikation einer Kommunikationseinrichtung wie z.B. einem Mobiltelefon durch Wählen zwischen einer ersten Toneinrichtung (5), umfassend mindestens ein Mikrophon und einen oder mehrere Lautsprecher, und einer zweiten Toneinrichtung (4), umfassend ein Mikrophon und einen oder mehrere Lautsprecher, wobei das Verfahren die folgenden Schritte umfasst:
Stummschalten der Ausgabe von mindestens einer Audioquelle (3) wie z.B. einem Autoradio, das mit den Lautsprechern verbunden ist, wenn ein Anruf auf der Kommunikationseinrichtung empfangen wird,
Auswahl der ersten Toneinrichtung für die Kommunikation, und
Wechseln zwischen der ersten und der zweiten Toneinrichtung auf Basis eines Signals von einer Fernbedienung (21).

11. Verwendung von Auswahlmitteln nach einem der Ansprüche 6 bis 9 als Einheit zur nachträglichen Anbringung in einem Fahrzeug.

## Revendications

1. Système de communication (1), comme un système de communication pour un véhicule, comprenant
au moins un dispositif de communication (2) comme un téléphone portable,
au moins une source audio (3), comme un autoradio,
un premier dispositif audio (5) comprenant au moins un microphone et un ou plusieurs haut-parleurs, et
un deuxième dispositif audio (4) comprenant un microphone et un ou plusieurs haut-parleurs
**caractérisé en ce que**
ledit système comprend un moyen de sélection (6) pour établir un contact entre ledit dispositif de communication (2) et ledit premier dispositif audio (5) ou ledit deuxième dispositif audio (4), et une interruption partielle ou totale du contact entre ladite source audio (3) et le dispositif audio (4, 5) connecté à la source audio où ledit moyen de sélection est commandé par une télécommande (21) permettant à l'utilisateur de choisir entre lesdits premier et deuxième dispositifs audio (4, 5).

2. Système de communication selon la revendication 1, **caractérisé en ce que** ledit deuxième dispositif audio (4) comprend un combiné.

3. Système de communication selon la revendication 1 ou 2, **caractérisé en ce que** au moins un microphone et au moins un haut-parleur dudit premier dispositif audio (5) sont placés dans des boîtiers séparés.

4. Système de communication selon l'une quelconque des revendications 1 à 3,
**caractérisé en ce que** ledit moyen de sélection (6) est connecté à ladite source audio (3) et audit premier dispositif audio (5) au moyen d'un câble (44) comprenant des connecteurs (40 à 43) adaptés à ladite source audio (3) et audit premier dispositif audio (5).

5. Système de communication selon l'une quelconque des revendications 1 à 4,
**caractérisé en ce que** ledit premier dispositif audio (5) inclut un ou plusieurs haut-parleurs d'un système d'autoradio.

6. Moyen de sélection (6) pour un système de communication comprenant
un moyen de commutation (23) de haut-parleurs pour choisir entre un haut-parleur dans un premier dispositif audio et un haut-parleur dans un deuxième dispositif audio,
un dispositif de silencieux (25) pour interrompre en partie ou en totalité la connexion de la sortie d'au moins une source audio (3) comme un autoradio au moyen de commutation (23) de haut-parleurs
**caractérisé en ce que**
ledit moyen de sélection (6) comprend en outre un moyen de commutation (24) de microphone pour choisir entre un microphone dans ledit premier dispositif audio et un microphone dans ledit deuxième dispositif audio,
au moins un dispositif de commande (26) commandant le dispositif de réglage silencieux (25) et
commandant l'acheminement d'un signal depuis un dispositif de communication (2) comme un téléphone portable vers ledit premier ou ledit deuxième dispositif audio (4, 5) au moyen desdits moyens de commutation (23, 24) de microphone et de haut-parleurs et vice versa
où ledit moyen de sélection est commandé par une télécommande (21) permettant à l'utilisateur de choisir entre lesdits premier et deuxième dispositifs audio (4, 5).

7. Moyen de sélection selon la revendication 6, **caractérisé en ce que** ledit moyen de sélection (6) comprend en outre un moyen amortisseur de bruit (27) et/ou un moyen de transformation de signal (28) filtrant et/ou amortissant certaines fréquences du signal transmis au haut-parleur du deuxième dispositif audio (4).

8. Moyen de sélection selon la revendication 7, **caractérisé en ce que** ledit moyen amortisseur de bruit (27) et ledit moyen de transformation de signal (28) suppriment ou amortissent une ou plusieurs bandes de fréquences.

9. Moyen de sélection selon la revendication 7 ou 8, **caractérisé en ce que** ledit moyen amortisseur de bruit (27) et ledit moyen de transformation de signal (28) suppriment ou amortissent des fréquences à l'extérieur d'une bande de 100 Hz à 10 kHz, de préférence de 200 Hz à 4 kHz.

10. Procédé de commande de communication d'un dispositif de communication (2) comme un téléphone portable en choisissant entre un premier dispositif audio (5) comprenant au moins un microphone et un ou plusieurs haut-parleurs, et un deuxième dispositif audio (4) comprenant un microphone et un ou plusieurs haut-parleurs, ledit procédé comprenant les étapes
de mise en sourdine la sortie d'au moins une source audio (3) comme un autoradio connecté aux haut-parleurs lors de la réception d'un appel sur ledit dispositif de communication
de sélection du premier dispositif audio pour la communication, et
de passage du premier au deuxième dispositif audio et inversement sur la base d'un signal provenant d'une télécommande (21).

11. Utilisation du moyen de sélection selon l'une quelconque des revendications 6 à 9 comme une unité à ajouter dans un véhicule.
